# EUROPÄISCHE PATENTSCHRIFT

(11) **EP 0 682 235 B1**
(45) Veröffentlichungstag und Bekanntmachung des Hinweises auf die Patenterteilung: **16.09.1998**
(21) Anmeldenummer: 95102488.4
(22) Anmeldetag: 22.02.1995
(51) Int. Cl.: G01G 23/01, G01L 25/00

(54) **Verfahren und Vorrichtung zum Abgleich eines Messkörpers eines Messwertaufnehmers**
Method and apparatus for calibrating a gauge of a sensor measuring device
Appareil et procédé pour calibrer une jauge d'un dispositif de mesure

(30) Priorität: 11.05.1994 DE 4416442
(43) Veröffentlichungstag der Anmeldung: 15.11.1995
(73) Patentinhaber: HOTTINGER BALDWIN MESSTECHNIK GMBH, D-64293 Darmstadt (DE)
(72) Erfinder: Gerlach, Hans Joachim, D-64739 Höchst-Hassenroth (DE); Will, Heinz Ronald, D-64665 Alsbach-Hähnlein (DE); Wägner, Ralf, D-65468 Trebur (DE); Schlachter, Werner, D-64287 Darmstadt (DE)
(74) Vertreter: Brandt, Ernst-Ulrich, Dipl.-Phys., Dipl.-Ing.

(56) Entgegenhaltungen:
- EP-A- 0 089 209
- MEASUREMENTS, Bd. 6, Nr. 2, April 1988 - Juni 1988 LONDON GB, Seiten 81-86, H.LEINONEN 'Experiments and analysis of force transmission in force transducers to improve their characteristics'
- MEASUREMENT TECHNIQUES, Bd. 35, Nr. 4, April 1992 NEW YORK US, Seiten 408-411, XP 000336740 S.N.POGODIN 'Automated calculating system for investigation of elastic characteristics of strain-gauge dynamometers'
- PATENT ABSTRACTS OF JAPAN Bd. 11, Nr. 261 (P-609) 2708 25 August 1987 & JP-A-62 066 127 (TOKYO ELECTRIC CO. LTD) 25 März 1987

## Beschreibung

Bei als Kraftaufnehmer oder Wägezelle ausgebildeten Meßwertaufnehmern ändert sich im allgemeinen das Meßverhalten bei Änderung der Krafteinleitungsbedingungen. Veränderte Krafteinleitungsbedingungen können z. B. schon aufgrund von kleinen Winkelfehlern bei nicht senkrechter Krafteinleitung vorliegen. Eine mögliche Ursache für Änderungen des Meßverhaltens liegt in fertigungsbedingten Ungleichförmigkeiten und Unsymmetrien des Meßkörpers und/oder der applizierten Aufnehmerelemente.

Möglicherweise sich ändernde Krafteinleitungsbedingungen machen aufwendige Maßnahmen zur Sicherstellung exakter Meßergebnisse erforderlich. Daß diese Maßnahmen im allgemeinen nach der Montage des Meßwertaufnehmers z. B. in einer Waage im Werk des Waagenherstellers vorgenommen werden müssen, ist besonders störend, da diese Maßnahmen komplex und zeitaufwendig sind. Für eine Waage, bei der die Waagenplattform nach erfolgter Montage fest mit dem Meßwertaufnehmer und dieser fest mit der Waagenbasis verbunden ist, sind in der EP-A-0 089 209 Testbelastungen vor Ausführung der Kompensationsmaßnahmen beispielsweise in Form von Materialabtragungen oder Widerstandsanpassungen vorgesehen. In der japanischen Patentanmeldung 62-107033 sind zusätzliche Aufnehmerelemente vorgesehen, so daß Belastungen des Meßwertaufnehmers durch unerwünschte Momente bzw. Seitenkräfte erfaßt und nach elektronischer Korrektur des Meßwertes ein korrigierter Belastungswert angezeigt wird. Auch hier sind Maßnahmen im Werk des Waagenherstellers erforderlich. Andere Maßnahmen, wie beispielsweise das Abkoppeln von Seitenkräften durch Wälzlager, sind stattdessen konstruktiv sehr aufwendig. Konstruktiv aufwendig sind auch die Ausgestaltungen, bei denen durch eine aufwendige Meßkörpergeometrie oder mit einer Vielzahl von Aufnehmerelementen auf dem Meßkörper die Auswirkungen von Ungleichförmigkeiten oder Unsymmetrien im Meßkörper bzw. in den Dehnungsmeßstreifenapplikationen möglichst vollständig beseitigt werden sollen.

Der Erfindung liegt die Aufgabe zugrunde, eine einfache und zugleich wirkungsvolle Maßnahme zu treffen, mit der ein Meßwertaufnehmer unempfindlicher gegen Änderungen in der Krafteinleitung wird.

Erfindungsgemäß wird diese Aufgabe mit einem Verfahren nach dem Patentanspruch 1 gelöst. In Abkehr von den bisher praktizierten Maßnahmen, die an den bereits montierten Meßwertaufnehmern durchgeführt werden oder die komplizierte Meßkörperstrukturen vorschlagen, lehrt die Erfindung, mit einem einfachen Abgleich im Herstellerwerk die Meßkörper möglichst unempfindlich gegen Seiten- oder Querkrafteinflüsse und damit gegen Änderungen in der Krafteinleitung zu machen. Das bedeutet auch, daß man im Herstellerwerk allen Meßkörpern einer Bauart ein vereinheitlichtes Verhalten gegen Seiten- oder Querkräfte geben kann, was eventuell darüber hinaus noch erforderliche Korrekturmaßnahmen sehr einfach gestaltet. Mit der Erfindung wird in vorteilhafter Weise erreicht, daß mit äußerst einfachen Mitteln die Seitenkraftempfindlichkeit soweit wie jeweils erforderlich reduziert werden kann. Durch die Erfindung wird es erstmals möglich, auf aufwendige Meßkörpergeometrien oder die Anbringung einer Vielzahl von Aufnehmerelementen auf dem Meßkörper zu verzichten und einfache und genau herstellbare bzw. applizierbare Meßkörper wie z. B. Pendelstützen-Meßkörper zu verwenden. Nach der Lehre der Erfindung ist eine genaue Messung auch bei sich während des Betriebs verändernden Krafteinleitungsbedingungen sichergestellt; dies ist besonders vorteilhaft bei Waagen, bei denen der Meßwertaufnehmer nicht fest mit einem Belastungseinleitungselement einerseits und einem Abstützbereich der Waagenbasis andererseits verbunden ist.

Vorteilhaft im Hinblick auf die erzielbare Genauigkeit ist ein Verfahren nach den Merkmalen des Patentanspruchs 2, bei dem ein oder auch mehrere weitere Abgleichvorgänge vorgenommen werden.

Zweckmäßig erfolgen die Belastungsvorgänge in zwei vorzugsweise rechtwinklig zueinander angeordneten Belastungsebenen, da so eine übersichtliche Auswertung gewährleistet ist.

Mit den Verfahrensschritten nach dem Patentanspruch 4 hat man eine einfache Kontrollmöglichkeit dadurch, daß die Vorzeichen und der Betrag der sich ergebenden Ausgangssignale überprüft werden. Bei unterschiedlichen Vorzeichen und betragsmäßig im wesentlichen gleichen Ausgangssignalen ist die Messung reproduzierbarer und ein Abgleich möglich.

Die weiteren Unteransprüche betreffen besonders einfache und günstige Ausgestaltungen der Erfindung.

Ausführungsbeispiele der Erfindung werden im folgenden anhand der Zeichnungen näher erläutert. Es zeigen:
- Fig. 1 und 2: eine Vorrichtung zur Durchführung des erfindungsgemäßen Verfahrens in zwei Ansichten,
- Fig. 3: die Vorrichtung ähnlich Fig. 1 mit abgewandelter Belastungseinrichtung,
- Fig. 4: eine schematische Darstellung der Ausgangssignalauswertung,
- Fig. 5: ein Diagramm mit den im Verfahrensablauf ermittelten Ausgangssignalen gegen die Drehstellungen,
- Fig. 6, 7, und 9, 10: Meßwertaufnehmer in zwei Ansichten,
- Fig. 8: ein Diagramm mit den im Verfahrensablauf ermittelten Ausgangssignalen gegen die Drehstellungen mit Zuordnung von Dehnungsmeßstreifen,
- Fig. 11, 12: Dehnungsmeßstreifenanordnungen für Meßwertaufnehmer nach den Fig. 6 und 7 bzw. Fig. 9 und 10.

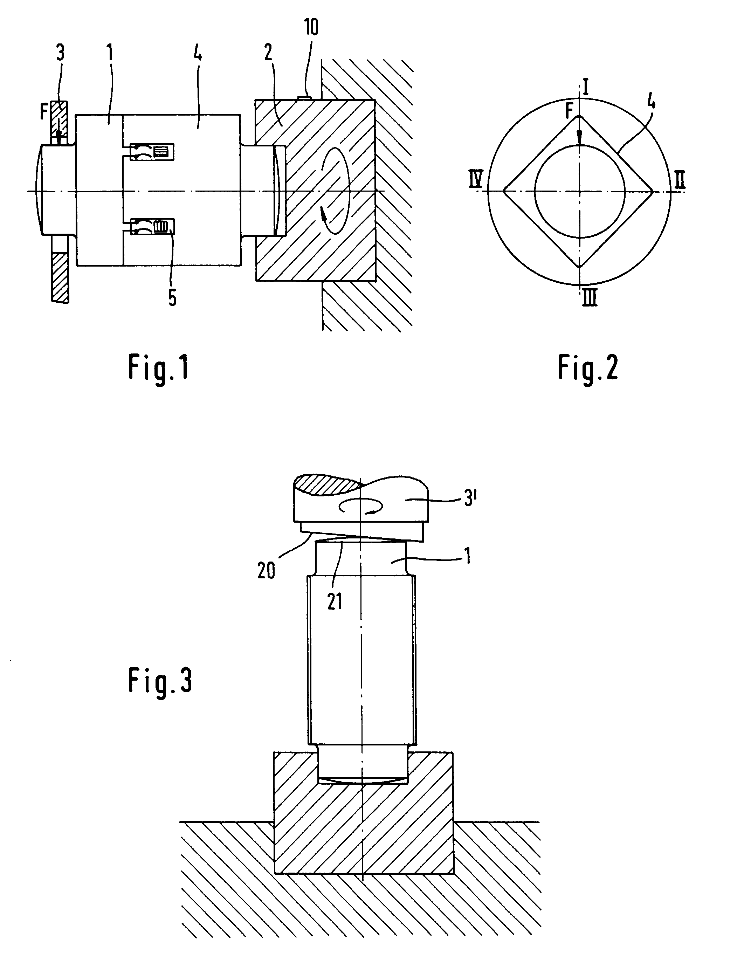

In den Figuren 1 und 2 ist eine Vorrichtung dargestellt, mit Hilfe derer ein Abgleich an einem Meßkörper 1 in Form einer Pendelstütze durchgeführt wird. Die Pendelstütze weist zylindrische Endabschnitte und einen Meßabschnitt in Form eines Vierkantstabes mit quadratischem Querschnitt auf. Auf den Vierkantflächen 4 sind jeweils Aufnehmerelemente 5 appliziert. Die Pendelstütze ist mit ihrem in der Zeichnung rechten Ende in einer Halteeinrichtung 2 fest eingespannt. Die Halteeinrichtung 2 kann beispielsweise als druckmittelbetätigbares Drei-Backen-Spannfutter ausgebildet sein, das von Hand oder programmgesteuert in unterschiedliche Drehstellungen eindrehbar und verriegelbar ist. Zur Definition der Drehstellungen ist beispielsweise eine Markierung 10 z. B. auf dem Spannfutter oder dem Meßkörper 1 vorgesehen.

Dem anderen Ende der Pendelstütze ist eine in vertikaler Richtung heb- oder senkbare Belastungseinrichtung 3 zugeordnet, die in der Fig. 1 nur schematisch angedeutet ist. Die Belastungseinrichtung 3 ist im übrigen raumfest angeordnet und ermöglicht die Belastung der Pendelstütze in einer vorgegebenen Belastungsrichtung in ihren unterschiedlichen Drehstellungen. Die Drehstellungen ergeben sich, ausgehend von der Drehstellung I in der Seitenansicht nach Fig. 2 jeweils durch eine Drehung des Spannfutters mitsamt Meßkörper 1 um 90°, so daß Belastungen in den Positionen I-IV des Meßkörpers 1 in der durch den Pfeil in Fig. 2 angegebenen Richtung erfolgen können.

In der Drehstellung I, die der Anfangsposition nach Einspannen der Pendelstütze entspricht, ist die Vierkantfläche 4 mit dem applizierten Aufnehmerelement 5, in dem dargestellten Beispiel sind dies Dehnungsmeßstreifenanordnungen, um 45° zur Horizontalebene geneigt. Die Aufnehmerelemente aller Vierkantflächen werden an einen Signalverstärker angeschlossen, der das Ausgangssignal der Dehnungsmeßstreifenanordnungen für eine Auswertung hinreichend verstärkt.

Nach dem Stillstand des Ausgangssignals nach erfolgtem Temperaturausgleich wird die Belastungseinrichtung abgesenkt und dadurch die Pendelstütze in der Drehstellung I in senkrechter Richtung nach unten belastet. Das Ausgangssignal wird erfaßt und der Meßkörper 1 durch Drehungen um 90° nacheinander in die jeweils nächsten Drehstellungen II, III, IV eingedreht und belastet; die entsprechenden Ausgangssignale werden erfaßt.

Zunächst werden die Ausgangssignale in den entgegengesetzten Belastungsrichtungen I und III bzw. II und IV verglichen: sind diese betragsmäßig gleich und weisen unterschiedliche Vorzeichen auf, wird die Auswertung der Ausgangssignale freigegeben, andernfalls ist ein neuer Belastungszyklus durchzuführen.

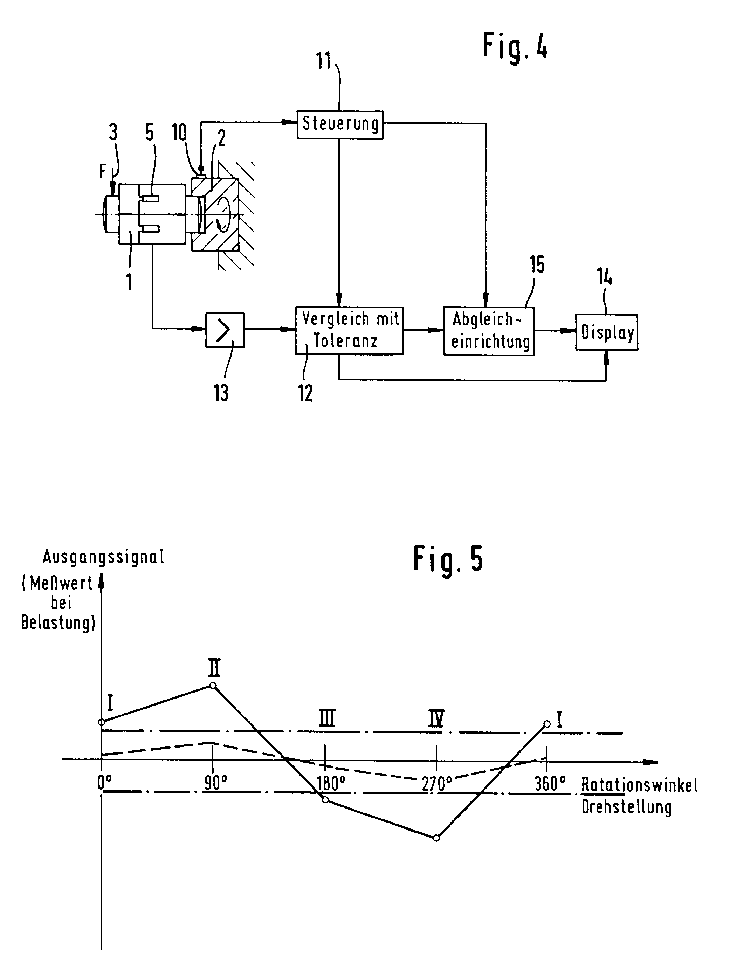

Liegt der Betrag aller Ausgangssignale innerhalb einer Toleranzgrenze, ist kein Abgleich des Meßkörpers erforderlich. In Fig. 5, in der die Ausgangssignale über den Drehstellungen aufgetragen sind, sind die Toleranzgrenzen durch die strichpunktierten Geraden parallel zur x-Achse dargestellt. Bei Überschreiten der Toleranzgrenze wird ein Abgleich wie folgt durchgeführt:

Der Meßkörper 1 wird in eine Drehstellung gebracht, bei der ein positives Ausgangssignal erfaßt wurde. Nun wird mechanisch an der nach oben weisenden Längskante des Vierkantabschnitts des Meßkörpers 1, d. h. in dem Längenbereich, in dem auch die Dehnungsmeßstreifenanordnungen angebracht sind, Material abgetragen. Die Abtragung erfolgt mit verlaufenden Übergängen, d. h. daß scharfe Kanten vermieden werden. Im dargestellten Beispiel mit den Ausgangssignalen nach der Darstellung in Fig. 5 wäre diese Drehstellung die Drehstellung I.

Der Meßkörper 1 wird anschließend in die Drehstellung II, der zweiten Drehstellung mit positivem Ausgangssignal, gedreht und hier ebenfalls mechanisch an der in dieser Drehstellung nach oben weisenden Längskante Material entfernt. Die Menge des jeweils abzutragenden Materials hängt von der Größe des jeweiligen Ausgangssignals ab.

Der Meßkörper 1 wird nun einem erneuten Belastungszyklus unterworfen. Es wird festgestellt, ob alle Ausgangssignale innerhalb der vorgegebenen Toleranzgrenzen liegen. Dies ist z. B. bei den in gestrichelten Linien dargestellten Ausgangssignalen in Fig. 5 der Fall. Falls dies nicht der Fall ist, wird in der zuvor beschriebenen Weise erneut ein Abgleich durch Materialabtrag vorgenommen.

Wurde beim Abgleich zuviel Material entfernt, kehren sich die Vorzeichen der Ausgangssignale um, so daß nun ein Abgleich in einer entgegengesetzten Richtung erforderlich wird.

Da das Verhalten in zwei z. B. orthogonalen Belastungsebenen grundsätzlich voneinander unabhängig ist, könnten die Abgleiche z. B. in den Drehstellungen I und III bzw. II und IV ohne gegenseitige Beeinflussung grundsätzlich auch unabhängig voneinander durchgeführt werden. Es ist jedoch vorteilhaft, die Belastungs- und Meßschritte komplett vor den Materialabtragungsschritten durchzuführen und dadurch Meßvorgänge von Bearbeitungsvorgängen zu trennen.

In der Fig. 4 ist eine Einrichtung dargestellt, mit der der Abgleich programmgesteuert erfolgt.

Der Meßkörper 1 wird in einer definierten Stellung in die Halteeinrichtung 2 eingespannt. Die Drehstellung wird mit einem einer Markierung 10 auf der Halteeinrichtung 2 zugeordneten Stellungsgeber erfaßt und einer Steuereinrichtung 11 zugeführt. Die Steuereinrichtung 11 gibt jeweils ein Drehstellungssignal an den Vergleicher 12. Dem Vergleicher 12 wird weiter das in einem Verstärker 13 verstärkte Ausgangssignal der Dehnungsmeßstreifenanordnungen auf dem Meßkörper 1 zugeführt. Im Vergleicher 12 wird durch Vergleich mit gespeicherten Toleranzgrenzen ermittelt, ob ein Abgleich erforderlich ist oder nicht. Ist kein Abgleich erforderlich, geht ein Gut-Signal an die Anzeigeeinheit 14. Ist ein Abgleich erforderlich, wird über die Steuerungseinrichtung 11 die Abgleicheinrichtung 15 in die einem Abgleich zugeordnete Drehstellung eingedreht und abhängig vom zugeordneten Ausgangssignal ein Materialabtrag in dem erforderlichen Ausmaß durchgeführt; die jeweilige Drehstellung und die Masse des Materialabtrages können dabei auch in der Anzeigeeinheit 14 zur Anzeige gebracht werden.

In der Fig. 3 ist eine Vorrichtung wie in Fig. 1 dargestellt, die jedoch eine unterschiedliche Belastungseinrichtung 3' aufweist. Die Belastungseinrichtung 3' ist drehbar, so daß der Meßkörper 1 raumfest gehalten werden kann. Eine zur Drehachse der Belastungseinrichtung 3' geneigte Belastungsfläche 20 wird dabei gegen eine ballige Endfläche 21 des Meßkörpers 1 in Form einer Pendelstütze gedrückt. Durch Drehen der Belastungseinrichtung um jeweils 90° wird der Meßkörper 1 in unterschiedlichen Belastungsrichtungen belastet. Die Auswertung der Ausgangssignale der Dehnungsmeßstreifenanordnungen und der Materialabtrag erfolgen analog zu dem oben Beschriebenen.

Die Anordnung mit drehender Belastungseinrichtung 3' und raumfest gehaltenem Meßkörper 1 wird vorzugsweise mit vertikaler Anordnung der Drehachse bzw. Symmetrieachse der Pendelstütze eingesetzt. Den vier Materialabtragstellungen können jeweils eigene Materialabtragseinrichtungen z. B. in Form von Schleifeinrichtungen zugeordnet werden. Ebenso ist die Anordnung einer in die verschiedenen Materialabtragstellungen eindrehbaren Schleifeinrichtung denkbar.

Es kann auch vorgesehen werden, daß die geneigte Belastungsfläche 20 raumfest ist, und die Pendelstütze mit der balligen Endfläche 21 gegenüber der Belastungsfläche 20 verdreht wird.

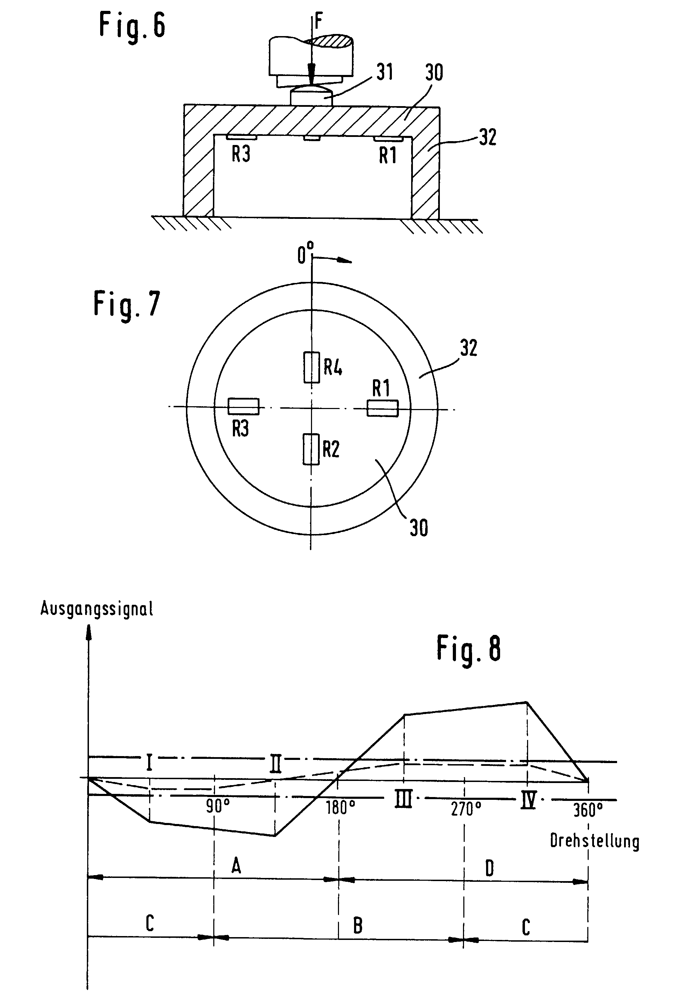

Anstelle oder zusätzlich zum Abgleich mittels Materialabtrag kann auch ein Abgleich durch Veränderung von Abgleichwiderständen in der Verschaltung der Aufnehmerelemente 5 erfolgen. Geeignet hierfür sind z. B. Meßkörper mit applizierten Dehnungsmeßstreifen-Meßbrücken aus mindestens vier Dehnungsmeßstreifen. Die Anordnung der Dehnungsmeßstreifen auf einem scheibenförmigen Meßkörper ist in den Figuren 6 und 7 näher dargestellt.

Der scheibenförmige Meßkörper 30 in Fig. 6 hat eine Krafteinleitungsstelle 31 in Form eines zentralen zylinderförmigen Ansatzes mit einer balligen Endfläche. Die Kraftausleitung bzw. Abstützung des Meßkörpers 30 erfolgt über einen Ringansatz 32 am äußeren Rand des scheibenförmigen Meßkörpers 30. Bei Kraftbeaufschlagung verformt sich der Meßkörper elastisch. Die Verformungen werden von vier an der Unterseite des Meßkörpers angeordneten Dehnungsmeßstreifen R1 bis R4 erfaßt. Die Dehnungsmeßstreifen R1 und R3 sind nahe dem äußeren Rand der Meßkörperscheibe angeordnet, die Dehnungsmeßstreifen R2 und R4 benachbart der Krafteinleitungsstelle 31. Die Dehnungsmeßstreifen R1 und R3 erfassen die durch eine Kraft nach unten hervorgerufenen Verformungen in Form von Stauchungen des Meßkörpers 30, die Dehnungsmeßstreifen R2 und R4 erfassen die hervorgerufenen Dehnungen.

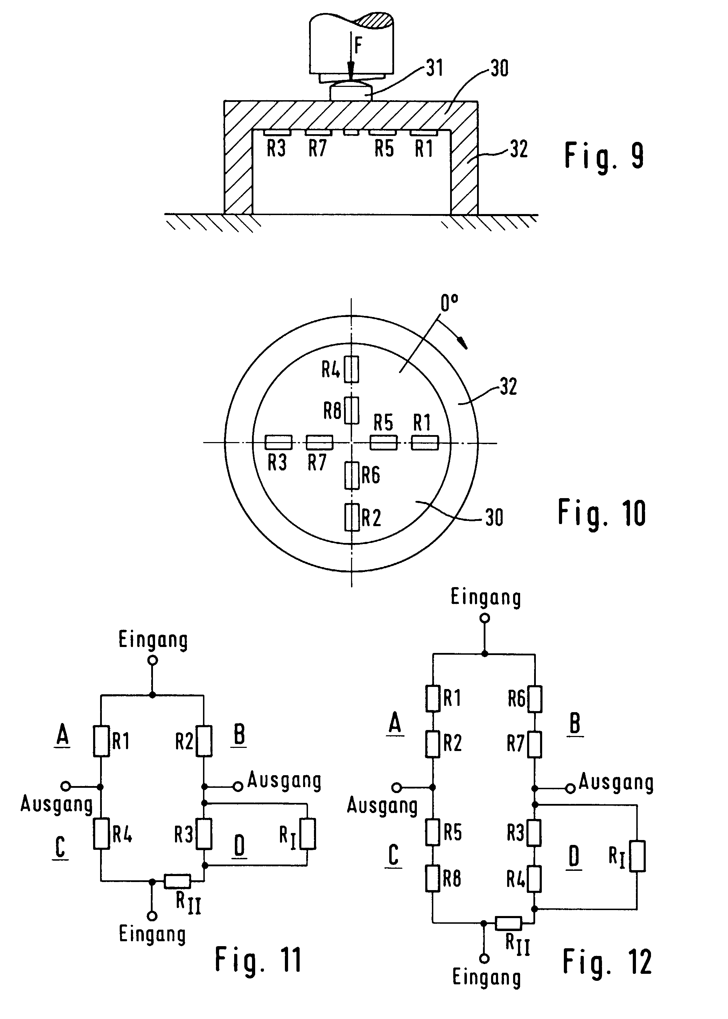

Die vier Dehnungsmeßstreifen R1 bis R4 sind in der aus Fig. 11 ersichtlichen Weise zu einer Meßbrücke verschaltet. Die Eingangsanschlüsse liegen zwischen den Dehnungsmeßstreifenwiderständen R1 und R2 einerseits und R4 und R3 andererseits. Das Ausgangssignal der Meßbrücke wird zwischen den Dehnungsmeßstreifen R1, R4 und den Dehnungsmeßstreifen R2, R3 abgenommen. Parallel zu einem der Brückenzweige, d. h. zu einem der Dehnungsmeßstreifen ist ein einstellbarer Widerstand RI angeordnet, in Serie ist zwischen diesem Dehnungsmeßstreifenwiderstand und dem zugehörigen Eingangsanschluß ein einstellbarer Widerstand RII vorgesehen. Die Zuordnung der Widerstände RI und RII zu einem der Dehnungsmeßstreifen, d. h. einem der Brückenzweige erfolgt in Abhängigkeit von den bei der Durchführung des Verfahrens ermittelten Ausgangssignalen. Über die Widerstände RI und RII erfolgt dann der erfindungsgemäße elektrische Abgleich des Meßwertaufnehmers.

Im einzelnen werden nach dem zuvor beschriebenen Verfahren die Ausgangssignale in Abhängigkeit von der jeweiligen Drehstellung ermittelt. Auch bei dieser Form des Meßkörpers können die Belastungsstellungen z. B. durch Drehen der mit einer geneigten Belastungsfläche versehenen Belastungseinrichtung bei drehfestem Meßkörper oder durch Drehen des Meßkörpers bei drehfester Belastungseinrichtung eingestellt werden. Die Halteeinrichtung wird hier durch die Abstützfläche für den Meßkörper gebildet.

Auch hier kann eine Belastungseinrichtung wie in Fig. 1 zum Einsatz kommen, die eine Belastung rechtwinklig zur Symmetrieachse am zentralen zylinderförmigen Ansatz aufbringt. Die Erläuterung des Abgleichverfahrens für den Meßwertaufnehmer gemäß Fig. 6 und 7 erfolgt anhand der Darstellung der Ausgangssignale in Fig. 8. Die Drehstellung 0° entspricht der Drehstellung, in der die außermittige Belastung benachbart zum Dehnungsmeßstreifen R4 aufgebracht wird. Im Bereich von 0 bis 180° werden die Belastungen demnach dem Brückenzweig A (siehe Fig. 11), d. h. dem Zweig mit dem Dehnungsmeßstreifen R1 zugeordnet, im Bereich zwischen 180° und 360° dem Zweig D mit dem Dehnungsmeßstreifen R3, im Bereich zwischen 90° und 270° dem Zweig B mit dem Dehnungsmeßstreifen R2 und schließlich im Bereich 270° bis 90° dem Zweig C mit dem Dehnungsmeßstreifen R4. Die Zuordnungen sind in der Fig. 8 durch die Linien A, B, C und D, die die entsprechenden Abschnitte der x-Achse (Drehstellungen) kennzeichnen, verdeutlicht.

Nach Durchführung einer Belastungsserie in den Drehstellungen I bis IV wird derjenige Brückenzweig ermittelt, der die größte Empfindlichkeit zeigt, im Beispiel gemäß Fig. 8 ist dies der Brückenzweig D mit dem Dehnungsmeßstreifen R3. Diesem Dehnungsmeßstreifen werden, wie oben bereits erwähnt, die Widerstände RI und RII zugeordnet, um das Verhalten dieses Brückenzweiges durch Anordnung eines Shuntwiderstandes RI zu bedämpfen. Der Widerstand RI bewirkt die Bedämpfung des Brückenzweiges und der Widerstand RII dient dabei zur Wiederherstellung der Brückensymmetrie. Die Widerstände RI und RII können der Brückenschaltung hinzugefügt werden oder es kann in an sich bekannter Weise für die vorgesehene Widerstandsanordnung eine durch Auftrennen von Leiterbahnen aktivierbare Widerstandsanordnung vorgesehen sein; im letzteren Fall wird eine derartige Widerstandsanordnung für jeden der Brückenzweige A bis D vorgesehen, die dann lediglich durch Auftrennen der Aktivierung bedarf. Der Betrag von RI und RII wird durch Versuche bestimmt, so daß die Größenordnungen für Abgleichvorgänge einer Meßaufnehmer-Serie bekannt sind. Nach Anbringen bzw. Aktivieren von RI und RII wird eine weitere Belastungsserie durchgeführt und geprüft, ob die Ausgangssignale innerhalb der Toleranz liegen. Durch Verändern der Widerstandsbeträge von RI und RII lassen sich die Ausgangssignale in der Regel schnell in die Toleranzzone bringen. Zusätzlich können bei Bedarf entsprechende Widerstandsanordnungen RI, RII in den benachbarten Zweigen B oder C angebracht oder aktiviert werden.

In den Figuren 9 und 10 ist ein Meßwertaufnehmer dargestellt, der dem Meßwertaufnehmer nach den Figuren 6 und 7 entspricht, der gemäß Fig. 12 jedoch mit acht Dehnungsmeßstreifen R1 bis R8 versehen ist, wobei jeweils die Dehnungsmeßstreifen R1 und R5, R2 und R6, R3 und R7, R4 und R8 in radialer Richtung auf dem scheibenförmigen Meßkörper angeordnet sind und die Dehnungsmeßstreifen R1 bis R4 dem Rand 32, die Dehnungsmeßstreifen R5 bis R8 der Krafteinleitungsstelle 31 benachbart sind. Auch in diesem Beispiel werden die Widerstände RI (Parallelwiderstand) und RII (Serienwiderstand) den Dehnungsmeßstreifen eines Brückenzweiges zugeordnet, im Beispiel den Dehnungsmeßstreifen R3 und R4 des Brückenzweiges D, der gemäß Darstellung in Fig. 8 die Höchstempfindlichkeit aufweist und in erster Linie zu bedämpfen ist. Auch hier lassen sich durch Belastungsserien und Verändern der Widerstände R1 und R2 die Ausgangssignale schnell in die Toleranzzone bringen. Gegebenenfalls können auch bei dieser Ausführungsform die Nachbarzweige mit Widerstandsanordnungen RI und RII bedämpft werden. Beim erfindungsgemäßen Abgleich eines Meßwertaufnehmers können der mechanische bzw. der elektrische Abgleich alternativ oder zusammen zum Einsatz kommen.

## Patentansprüche

1. Verfahren zum Abgleich eines Meßkörpers eines Meßwertaufnehmers mit einer Symmetrieachse, bei dem
- der mit mindestens einem Aufnehmerelement versehene Meßkörper durch zumindest eine Halteeinrichtung gehalten wird,
- beabstandet zur Halterungsstelle eine Belastung abweichend in Richtung und/oder Position von der Symmetrieachse auf den Meßkörper aufgebracht wird und dieser Belastung ein Ausgangssignal zugeordnet wird,
- mindestens ein zusätzlicher Belastungsvorgang in unterschiedlicher Belastungsrichtung vorgenommen wird,
- anhand der Ausgangssignale ermittelt wird, ob ein Abgleich erforderlich ist und gegebenenfalls
- zumindest einmal ein mechanischer und/oder elektrischer Abgleich des Meßkörpers vorgenommen wird.

2. Verfahren nach Anspruch 1, dadurch gekennzeichnet, daß nach einem Abgleich erneut Belastungsvorgänge vorgenommen werden, anhand derer ermittelt wird, ob ein weiterer Abgleich erforderlich ist.

3. Verfahren nach Anspruch 1 oder Anspruch 2, dadurch gekennzeichnet, daß die Belastungsvorgänge in zwei vorzugsweise rechtwinklig zueinander angeordneten Belastungsebenen erfolgen.

4. Verfahren nach Anspruch 3, dadurch gekennzeichnet, daß die Belastungsvorgänge in jeweils einer Belastungsebene entgegengesetzte Belastungsrichtungen aufweisen.

5. Verfahren nach einem oder mehreren der vorhergehenden Ansprüche, dadurch gekennzeichnet, daß nach einer Belastung der Meßkörper bei raumfest angeordneter Belastungseinrichtung um seine Symmetrieachse gedreht wird.

6. Verfahren nach einem oder mehreren der vorhergehenden Ansprüche, dadurch gekennzeichnet, daß der Meßkörper mit einem Ende in der Halteeinrichtung gehalten wird und die Belastung im Bereich des anderen Endes erfolgt.

7. Verfahren nach Anspruch 6, dadurch gekennzeichnet, daß eine zur Symmetrieachse geneigte ebene Belastungsfläche (2) der Belastungseinrichtung (3') einer balligen Endfläche (21) des Meßkörpers (1, 30) zugeordnet wird.

8. Verfahren nach nach einem oder mehreren der vorhergehenden Ansprüche, dadurch gekennzeichnet, daß der Meßkörper derart angeordnet wird, daß seine Symmetrieachse horizontal verläuft.

9. Verfahren nach einem oder mehreren der vorhergehenden Ansprüche, dadurch gekennzeichnet, daß der Meßkörper an zwei Stellen gehalten wird.

10. Verfahren nach Anspruch 9, dadurch gekennzeichnet, daß die Belastung zwischen den beiden Halterungsstellen erfolgt.

11. Verfahren nach Anspruch 9, dadurch gekennzeichnet, daß die Belastung außerhalb der beiden Halterungsstellen erfolgt.

12. Verfahren nach einem oder mehreren der vorhergehenden Ansprüche, dadurch gekennzeichnet, daß die Belastung durch Einleiten eines Drehmoments und/oder eines Biegemoments in den Meßkörper zumindest an einer Halterungsstelle erfolgt.

13. Verfahren nach einem oder mehreren der vorhergehenden Ansprüche, dadurch gekennzeichnet, daß insbesondere das Eindrehen in die Belastungsstellungen und/oder das Eindrehen in Abgleichstellungen programmgesteuert erfolgt.

14. Verfahren nach einem oder mehreren der vorhergehenden Ansprüche, dadurch gekennzeichnet, daß zum Abgleich Teile des Meßkörpers entfernt werden.

15. Verfahren nach einem oder mehreren der vorhergehenden Ansprüche, dadurch gekennzeichnet, daß zum Abgleich Anpassungen der auf dem Meßkörper applizierten Aufnehmerelemente und/oder deren Verschaltung erfolgen.

16. Verfahren nach Anspruch 15, dadurch gekennzeichnet, daß die Aufnehmerelemente vorzugsweise durch Dehnungsmeßstreifen gebildet werden und zu einer Meßbrücke verschaltet sind und daß zum Abgleich zumindest ein Zweig der Meßbrücke durch eine Widerstandsanordnung und/oder eine Veränderung eines Aufnehmerelements bedämpft wird.

17. Verfahren nach Anspruch 16, dadurch gekennzeichnet, daß die Widerstandsanordnung durch einen parallel zum Brückenzweig angeordeten Shuntwiderstand und einen in Reihe zum Aufnehmerelement im Brückenzweig angeordneten Widerstand gebildet wird.

18. Vorrichtung zum Abgleich eines Meßkörpers (1, 30) nach Patentanspruch 1 mit einer Belastungseinrichtung (3, 3'), zumindest einer Halteeinrichtung (2), einer Dreheinrichtung für den Meßkörper (1, 30) oder die Belastungseinrichtung (3, 3'), einer Steuereinrichtung (11), einer Einrichtung zur Ermittlung der Drehung (10), einer Einrichtung zur Aufnahme und Verstärkung der Ausgangssignale der auf dem Meßkörper (1) applizierten Aufnehmerelemente (5), einer dieser nachgeschalteten Vergleichseinrichtung (12), in der die Ausgangssignale mit einem vorgegebenen Grenzwert verglichen werden, deren einer Ausgang mit einem Eingang einer Abgleicheinrichtung (15) und deren anderer Ausgang mit einem Eingang einer Anzeigeeinheit (14) verbunden ist, wobei die Abgleicheinrichtung (15) unter Zwischenschaltung der Steuereinrichtung (11) mit dem Ausgang der Einrichtung zur Ermittlung der Drehung (10) und einem weiteren Eingang der Anzeigeeinheit (14) verbunden ist.

19. Vorrichtung nach Anspruch 18, dadurch gekennzeichnet, daß die Belastungseinrichtung (3') eine zur Symmetrieachse des Meßkörpers (1) geneigte ebene Belastungsfläche (20) und der Meßkörper (1, 30) eine dieser zugeordnete ballige Endfläche (21) aufweist.

20. Vorrichtung nach Anspruch 19, dadurch gekennzeichnet, daß die Halteeinrichtung durch eine Abstützfläche für den Meßkörper gebildet ist.

## Claims

1. Method of balancing a workpiece of a sensor having an axis of symmetry in which
- the workpiece provided with at least one sensor element is held in at least one mounting device,
- a load is applied to the workpiece at a position spaced from the position at which it is held and varying in direction and/or position from the axis of symmetry, an output signal being associated with this load,
- at least one additional loading process is effected in a different direction of loading,
- it is determined with the aid of the output signals as to whether balancing is necessary and, if required
- at least one mechanical and/or electrical balancing of the workpiece is effected.

2. Method in accordance with Claim 1, characterised in that, following one balancing process, renewed loading processes are effected and on the basis thereof it is determined whether a further balancing process is required.

3. Method in accordance with Claim 1 or Claim 2, characterised in that the loading processes ensue in two loading planes that are preferably disposed at right angles to one another.

4. Method in accordance with Claim 3, characterised in that the loading processes in a respective loading plane comprise opposed directions of loading.

5. Method in accordance with one or more of the preceding Claims, characterised in that the workpiece is rotated about its axis of symmetry after a loading process in the case where the loading device is spatially fixed.

6. Method in accordance with one or more of the preceding Claims, characterised in that the workpiece is held at one end in the mounting device and the loading is effected at the other end region.

7. Method in accordance with Claim 6, characterised in that a plane loading surface (2) of the loading device (3') is inclined to the axis of symmetry and is associated with a rounded end surface (21) of the workpiece (1, 30).

8. Method in accordance with one or more of the preceding Claims, characterised in that the workpiece is arranged in such a way that its axis of symmetry extends horizontally.

9. Method in accordance with one or more of the preceding Claims, characterised in that the workpiece is held at two positions.

10. Method in accordance with Claim 9, characterised in that the loading occurs between the two mounting positions.

11. Method in accordance with Claim 9, characterised in that the loading occurs outside the two mounting positions.

12. Method in accordance with one or more of the preceding Claims, characterised in that the loading is effected by introducing a torque and/or a bending moment into the workpiece at least at one mounting position.

13. Method in accordance with one or more of the preceding Claims, characterised in that especially the processes of rotating into the loading positions and/or the processes of rotating into the balancing positions are effected in program controlled manner.

14. Method in accordance with one or more of the preceding Claims, characterised in that, for balancing purposes, parts of the workpiece are removed.

15. Method in accordance with one or more of the preceding Claims, characterised in that, for balancing purposes, adjustments are made to the sensor elements applied to the workpiece and/or to their circuitry.

16. Method in accordance with Claim 15, characterised in that the sensor elements are preferably formed by wire strain gauges and are wired up as a test bridge and that, for balancing purposes, at least one arm of the test bridge is damped by an arrangement of resistors and/or by varying one of the sensor elements.

17. Method in accordance with Claim 16, characterised in that the arrangement of resistors is formed by a shunt resistor arranged in parallel with the arm of the bridge and a resistor connected in series with the sensor element in the arm of the bridge.

18. Apparatus for balancing a workpiece (1, 30) in accordance with Claim 1 comprising a loading device (3, 3'), at least one mounting device (2), a device for rotating the workpiece (1, 30) or the loading device (3, 3'), a control device (11), a device for determining the rotation (10), a device for receiving and amplifying the output signals from the sensor elements (5) applied to the workpiece (1), a comparator device (12) connected to said receiving device in which said comparator device the output signals are compared with a predetermined limiting value and the one output of which is connected to an input of a balancing device (15) and the other output of which is connected to an input of a display unit (14), whereby the balancing device (15) is connected through the intermediary of the control device (11) to the output of the device for determining the rotation (10) and to a further input of the display unit (14).

19. Apparatus in accordance with Claim 18, characterised in that the loading device (3') comprises a plane loading surface (20) which is inclined to the axis of symmetry of the workpiece (1) and the workpiece (1, 30) comprises a rounded end surface (21) which is associated therewith.

20. Apparatus in accordance with Claim 19, characterised in that the mounting device is formed by a support surface for the workpiece.

## Revendications

1. Procédé d'équilibrage d'un corps de mesure d'un capteur de valeurs de mesure présentant un axe de symétrie, dans lequel
- le corps de mesure pourvu d'au moins un élément de capteur est maintenu par au moins un dispositif de maintien,
- à distance du point de maintien, une charge, s'écartant en direction et/ou en position de l'axe de symétrie, est appliquée au corps de mesure et à cette charge est associé un signal de sortie,
- au moins une opération supplémentaire de mise sous charge est effectuée dans une direction de charge différente,
- à l'aide des signaux de sortie il est déterminé si un équilibrage est nécessaire et éventuellement
- il est procédé au moins une fois à un équilibrage mécanique et/ou électrique du corps de mesure.

2. Procédé selon la revendication 1, caractérisé en ce qu'après un équilibrage, il est procédé à de nouvelles opérations de mise sous charge, à l'aide desquelles il est déterminé si un équilibrage complémentaire est nécessaire.

3. Procédé selon la revendication 1 ou la revendication 2, caractérisé en ce que les opérations de mise sous charge s'effectuent dans deux plans de charge de préférence à angle droit l'un par rapport à l'autre.

4. Procédé selon la revendication 3, caractérisé en ce que les opérations de mise sous charge présentent des sens de charge opposés dans chaque plan de charge.

5. Procédé selon une ou plusieurs des revendications précédentes, caractérisé en ce qu'après une mise sous charge le corps de mesure est tourné autour de son axe de symétrie, le dispositif de mise sous charge étant fixe dans l'espace.

6. Procédé selon une ou plusieurs des revendications précédentes, caractérisé en ce que le corps de mesure est maintenu par une extrémité dans le dispositif de maintien et la mise sous charge se produit dans la zone de l'autre extrémité.

7. Procédé selon la revendication 6, caractérisé en ce qu'une surface plane de charge (20), inclinée par rapport à l'axe de symétrie, du dispositif de mise sous charge (3') est associée à une surface bombée d'extrémité (21) du corps de mesure (1, 30).

8. Procédé selon une ou plusieurs des revendications précédentes, caractérisé en ce que le corps de mesure est disposé de manière que son axe de symétrie s'étende horizontalement.

9. Procédé selon une ou plusieurs des revendications précédentes, caractérisé en ce que le corps de mesure est maintenu en deux points.

10. Procédé selon la revendication 9, caractérisé en ce que la charge s'effectue entre les deux points de maintien.

11. Procédé selon la revendication 9, caractérisé en ce que la mise sous charge s'effectue à l'extérieur des deux points de maintien.

12. Procédé selon une ou plusieurs des revendications précédentes, caractérisé en ce que la mise sous charge s'effectue par introduction d'un couple de rotation et/ou d'un moment de flexion dans le corps de mesure, au moins en un point de fixation.

13. Procédé selon une ou plusieurs des revendications précédentes, caractérisé en ce qu'en particulier l'amenée, par rotation, dans les positions de mise sous charge et/ou l'amenée, par rotation, dans des positions d'équilibrage s'effectue de manière programmée.

14. Procédé selon une ou plusieurs des revendications précédentes, caractérisé en ce que pour l'équilibrage, des parties du corps de mesure sont enlevées.

15. Procédé selon une ou plusieurs des revendications précédentes, caractérisé en ce que pour l'équilibrage il est procédé à des adaptations des éléments de capteur appliqués sur le corps de mesure et/ou de leur câblage.

16. Procédé selon la revendication 15, caractérisé en ce que les éléments de capteur sont constitués de préférence par des jauges de contrainte et sont câblés en un pont de mesure et en ce que pour l'équilibrage, au moins une branche du pont de mesure est amortie par un dispositif à résistance et/ou un ajustage d'un élément de capteur.

17. Procédé selon la revendication 16, caractérisé en ce que le dispositif à résistance est formé par une résistance shunt, montée en parallèle sur la branche du pont, et par une résistance montée en série avec l'élément de capteur, dans la branche du pont.

18. Dispositif d'équilibrage d'un corps de mesure (1, 30) selon la revendication 1, comprenant un dispositif de mise sous charge (3, 3'), au moins un dispositif de maintien (2), un dispositif pour faire tourner le corps de mesure (1, 30) ou le dispositif de mise sous charge (3, 3'), un dispositif de commande (11), un dispositif (10) destiné à évaluer la rotation, un dispositif destiné à recevoir et à amplifier les signaux de sortie des éléments de capteur (5) appliqués sur le corps de mesure (1), un dispositif de comparaison (12) monté en aval du dispositif précédent, dans lequel les signaux de sortie sont comparés à une valeur limite donnée, dont une sortie est reliée à une entrée d'un dispositif d'équilibrage (15) et dont une autre sortie est reliée à une entrée d'une unité d'affichage (14), le dispositif d'équilibrage (15) étant relié, par l'intermédiaire du dispositif de commande (11), à la sortie du dispositif (10) destiné à évaluer la rotation et à une autre entrée de l'unité d'affichage (14).

19. Dispositif selon la revendication 18, caractérisé en ce que le dispositif de mise sous charge (3') présente une surface plane de charge (20), inclinée par rapport à l'axe de symétrie du corps de mesure (1) et le corps de mesure (1, 30) présente une surface bombée d'extrémité (21), associée à la surface de charge.

20. Dispositif selon la revendication 19, caractérisé en ce que le dispositif de maintien est formé par une surface d'appui pour le corps de mesure.
